# EUROPÄISCHE PATENTSCHRIFT

(11) **EP 3 908 480 B1**
(45) Veröffentlichungstag und Bekanntmachung des Hinweises auf die Patenterteilung: **13.12.2023**
(21) Anmeldenummer: 20700550.5
(22) Anmeldetag: 06.01.2020
(51) Int. Cl.: B60N 2/865, B60N 2/888

(54) **VERSTELLMECHANISMUS UND KOPFSTÜTZE**
ADJUSTMENT MECHANISM AND HEADREST
MÉCANISME DE RÉGLAGE ET APPUI-TÊTE

(30) Priorität: 07.01.2019 DE 102019200101
(43) Veröffentlichungstag der Anmeldung: 17.11.2021
(73) Patentinhaber: Adient US LLC, Plymouth, MI 48170 (US)
(72) Erfinder: FROTZ, Thomas, 42929 Wermelskirchen (DE); JAKUBEC, Ivan, 91701 Trnava (SK); BANÁS, Martin, 911 01 Trencín (SK); THILKER, Lutz, 42799 Leichlingen (DE)
(74) Vertreter: Liedhegener, Ralf
(86) Internationale Anmeldenummer: PCT/EP2020/050125
(87) Internationale Veröffentlichungsnummer: WO 2020/144131

(56) Entgegenhaltungen:
- DE-A1- 10 206 223
- DE-A1-102011 009 659
- US-A1- 2006 226 688

## Beschreibung

Die Erfindung betrifft einen Verstellmechanismus, insbesondere für eine Kopfstütze für einen Sitz, gemäß dem Oberbegriff des Anspruchs 1.

Die Erfindung betrifft weiterhin eine Kopfstütze für einen Sitz.

Es sind allgemein Kopfstützen für Sitze, beispielsweise Fahrzeugsitze, bekannt, welche zu einer Ablage des Kopfes eines Fahrzeuginsassen und zur Verminderung von Krafteinwirkungen auf die Halswirbelsäule des Fahrzeuginsassen bei einer plötzlichen Veränderung einer Fahrzeugbewegung, beispielsweise bei einem Unfall, vorgesehen sind. Für einen möglichst hohen Komfort bei der Ablage des Kopfes und einen bestmöglichen Schutz ist neben einer Einstellung einer Höhe und einer Neigung der Kopfstütze auch eine Längseinstellung eines Kopfanlageelements zur Verringerung eines Abstands des Kopfs zu einer Kopfanlagefläche bekannt.

Eine solche Kopfstütze mit einer Kopfanlagefläche, die zu dem Kopf eines Fahrzeuginsassen hin und davon weg bewegbar ist, ist aus der DE 10 2011 009 659 A1 bekannt. Zwischen der Kopfanlagefläche und einer Basisplatte sind zwei gekreuzte Hebel vorgesehen, wobei jeder Hebel mit der Basisplatte und mit der Kopfanlagefläche verbunden ist. Jeder Hebel weist ein Festlager und ein Loslager auf, wobei das Festlager eines ersten Hebels fest mit der Basisplatte verbunden ist und das Festlager des verbleibenden Hebels fest mit der Kopfanlagefläche verbunden ist. Weiterhin ist das Loslager des ersten Hebels entlang der Kopfanlagefläche verschiebbar und das Loslager des verbleibenden Hebels entlang der Basisplatte verbunden. Eine Veränderung eines Verstellwegs zu dem Kopf eines Fahrzeuginsassen hin und davon weg erfolgt durch eine Variation einer Länge der Hebel, indem ein Winkel der beiden Hebel zueinander geändert wird. Weiterhin ist ein Arretiermechanismus vorgesehen, welcher aus einem Arretierungsmittel besteht, das formschlüssig mit Formschlussmitteln, die an dem Loslager vorgesehen sind, zusammenwirkt. Die Arretierungsmittel bewirken, dass sich das Loslager nicht entlang der Basisplatte verschieben kann.

Weiterhin ist aus der EP 1 584 514 B1 eine Kopfstütze für einen Automobilsitz mit einem Kopfstützenkörper und zwei mit dem Kopfstützenkörper verbundenen Kopfstützenstangen, die in einer Rückenlehne des Automobilsitzes aufnehmbar sind, bekannt. Jede Kopfstützenstange weist ein mit ihr verbundenes Trägerteil auf. Der Kopfstützenkörper weist ein Gehäuse mit einer Vorderwand und einer Rückwand auf, wobei das Gehäuse zwischen einer hinteren Grundstellung, in der das Trägerteil an einer Innenseite der Vorderwand liegt, und einer Ausfahrstellung, in der das Trägerteil von der Vorderwand entfernt ist, beweglich ist. Weiterhin ist ein zwischen dem Trägerteil oder den Kopfstützenstangen und der Vorderwand angelenktes Gestänge vorgesehen, wobei das Gestänge ein Scherengestänge mit einem Schwenkhebel und einem Abstützhebel ist, welche jeweils zwischen ihren Enden drehbar miteinander verbunden sind. Dabei ist der Schwenkhebel mit seinem oberen Ende mit dem Trägerteil oder den Kopfstützenstangen und mit seinem unteren Ende mit dem Gehäuse gelenkig verbunden. Der Abstützhebel stützt mit seinem oberen Ende das Gehäuse annähernd vertikal ab und ist mit seinem unteren Ende an einer Abstützfläche abgestützt, wenn der Kopfstützenkörper in der Ausfahrstellung ist. Das obere Ende des Abstützhebels weist eine Führungsstange auf, die mit jeweils einem vertikalen Langloch im Inneren des Gehäuses zusammenwirkt.

Aus der WO 2017/148831 A1 ist eine Kopfstütze für ein Kraftfahrzeug mit einem Basisteil zur Befestigung an einer Rückenlehne eines Fahrzeugsitzes und einem zur Anlage für einen Kopf eines Fahrzeuginsassen ausgebildeten Kopfteil und einer Verstelleinrichtung zwischen Basisteil und Kopfteil bekannt. Die Verstelleinrichtung ist vorgesehen, um eine lineare Verstellung des Kopfteils zwischen einer Minimalstellung und einer Maximalstellung relativ zum Basisteil zu bewirken, wobei die Verstelleinrichtung ein Zwischenteil und mehrere sich synchron bei der Verstellung unter einer Schwenkbewegung verschwenkende Schwenkhebel aufweist. Die Schwenkhebel sind so angeordnet und ausgebildet, dass zwischen dem Kopfteil und dem Zwischenteil ein erstes Gelenkparallelogramm und zwischen dem Zwischenteil und dem Basisteil ein zweites Gelenkparallelogramm ausgebildet sind. Die Verstelleinrichtung weist einen Synchronhebel zwischen dem Kopfteil und dem Basisteil auf, um eine relative Ausrichtung des Kopfteils bezüglich des Basisteils bei der Verstellung festzulegen und die Schwenkbewegung der Schwenkhebel des ersten Gelenkparallelogramms mit der Schwenkbewegung der Schwenkhebel des zweiten Gelenkparallelogramms zu synchronisieren. Die Kopfstütze weist ferner eine Rasteinrichtung auf, um das Kopfteil relativ zum Basisteil rastend festzulegen.

Weitere Kopfstützen werden beschrieben in DE 20 2017 106 120 U1, US 2007/0085400 A1, US 2006/0226688 A1 und WO 2014/122379 A1.

Aus der DE 102 06 223 A1 ist Scherengestell für einen Sitz bekannt, mit einem Grundelement, einem Sitzelement, und einem ersten und einem zweiten Scherenelement, die zwischen dem Grund- und dem Sitzelement vorgesehen und die miteinander mittels einer Scherenachse schwenkbeweglich verbunden sind. Das erste Scherenelement weist einen ersten und einen zweiten Endabschnitt auf und ist mit seinem ersten Endabschnitt mittels einer ersten Verbindungsachse mit dem Grundelement schwenkbeweglich verbunden, wobei die erste Verbindungsachse an einem vom Grundelement starr nach oben stehenden ersten Element vorgesehen ist. Der zweite Endabschnitt des ersten Scherenelementes ist mit dem Sitzelement mittels eines zweiten Elementes beweglich verbunden, das vom Sitzelement nach unten steht. Das zweite Scherenelement weist einen ersten und einen zweiten Endabschnitt auf, und ist mit seinem ersten Endabschnitt mit dem Sitzelement mittels eines dritten Elementes beweglich verbunden, das vom Sitzelement nach unten steht. Der zweite Endabschnitt des zweiten Scherenelementes ist mit dem Grundelement mittels eines vierten Elementes beweglich verbunden, das vom Grundelement nach oben steht, wobei das erste, das zweite, das dritte und das vierte Element derartig vorgesehen sind, dass im zusammengeschwenkten Zustand des Scherengestelles der erste Endabschnitt des zweiten Scherenelementes sich unter der ersten Verbindungsachse, der zweite Endabschnitt des ersten Scherenelementes sich unter dem zweiten Endabschnitt des zweiten Scherenelementes und die Scherenachse sich unter der ersten Verbindungsachse und unter dem zweiten Endabschnitt des zweiten Scherenelementes und über dem ersten Endabschnitt des zweiten Scherenelementes und über dem zweiten Endabschnitt des ersten Scherenelementes befindet, wobei das Sitzelement mittels einer Federeinrichtung in Bezug auf das Grundelement horizontal federnd beweglich ist.

Aufgabe der vorliegenden Erfindung ist es, einen gegenüber dem Stand der Technik verbesserten Verstellmechanismus, insbesondere für eine Kopfstütze für einen Sitz, und eine gegenüber dem Stand der Technik verbesserte Kopfstütze anzugeben.

Die Aufgabe wird erfindungsgemäß mit einem Verstellmechanismus gelöst, welcher die im Anspruch 1 angegebenen Merkmale aufweist, und mit einer Kopfstütze gelöst, welche die im Anspruch 6 angegebenen Merkmale aufweist.

Der Verstellmechanismus, welcher insbesondere zur Verwendung für eine Kopfstütze für einen Sitz, beispielsweise einen Fahrzeugsitz, vorgesehen ist, umfasst einen Scherenhebel. Der Scherenhebel umfasst zumindest einen ersten Hebelarm und zumindest einen zweiten Hebelarm, welche an einem gemeinsamen Kreuzungspunkt um eine gemeinsame Hauptschwenkachse zueinander schwenkbar sind.

Erfindungsgemäß ist an genau einem Hebelarmende jedes Hebelarms ein Ausgleichshebelarm schwenkbar um eine parallel zu der Hauptschwenkachse verlaufende Ausgleichsschwenkachse angeordnet. Dabei umfasst ein freies Ende des jeweiligen Ausgleichshebelarms eine Befestigungsstruktur zu einer Befestigung des Ausgleichhebelarms an einem Körper und ein dem Ausgleichshebelarm des jeweiligen Hebelarms gegenüberliegendes Hebelarmende eine Befestigungsstruktur zu einer Befestigung des Hebelarms an einem Körper.

Die mit dem Verstellmechanismus erzielten Vorteile bestehen insbesondere darin, dass der Scherenhebel ausschließlich zu einer linearen Bewegung von zwei Bauteilen zueinander ausschließlich rotatorische Bewegungen ausführt, wobei die Ausgleichshebelarme beim Schwenken der Hebelarme um die Hauptschwenkachse aufgrund ihrer Schwenkbewegung um die Ausgleichsschwenkachse einen Abstand zwischen der Befestigungsstruktur am jeweiligen Ausgleichshebelarm und der am gleichen Bauteil befestigten weiteren Befestigungsstruktur konstant hält. Hierdurch kann eine Längsverschiebung der weiteren Befestigungsstruktur an dem Bauteil entfallen. Die rotatorischen Bewegungen zeichnen sich gegenüber linearen Bewegungen durch eine signifikante Verringerung von Reibungskräften aus. Hierdurch kann eine Geräuschentwicklung während der Bewegung des Scherenhebels verringert werden. Auch kann ein Kraftaufwand zur manuellen oder motorischen Betätigung des Scherenhebels verringert werden. Weiterhin ist insbesondere gegenüber einer Führung der weiteren Befestigungsstruktur in einem Langloch die Gefahr einer Verkantung signifikant verringert. Hieraus und aus den geringen Reibungskräften ergeben sich eine besonders hohe Zuverlässigkeit des Scherenhebels sowie ein geringer Verschleiß und daraus folgend eine hohe Lebensdauer. Weiterhin können aufgrund der ausgleichenden Schwenkbewegung gegenüber der linearen Bewegungen besonders geringe Abmessungen des Scherenhebels und somit des Verstellmechanismus sowie daraus folgend besonders geringe Bauraumanforderungen realisiert werden.

In einer möglichen Ausgestaltung des Verstellmechanismus ist der Kreuzungspunkt ausgehend von einer Mitte der Hebelarme in Richtung der Ausgleichshebelarme verschoben. Dabei ist eine Größe der Verschiebung insbesondere abhängig von einer Länge der Ausgleichshebelarme. Beispielsweise beträgt die Größe der Verschiebung 80 % bis 100 % der Länge der Ausgleichshebelarme. Aufgrund der Verschiebung des Kreuzungspunkts kann unter Berücksichtigung der Länge der Ausgleichshebelarme eine lineare Bewegung sichergestellt werden, bei welcher sich ein Abstand zwischen den Befestigungsstrukturen der Ausgleichshebelarme in gleicher Weise wie ein Abstand zwischen den an den gegenüberliegenden Enden der Hebelarme angeordneten Befestigungsstrukturen verändert.

In einer weiteren möglichen Ausgestaltung des Verstellmechanismus weisen die Hebelarme jeweils zwei Hebelarmabschnitte auf, wobei sich ein erster Hebelarmabschnitt ausgehend von dem Kreuzungspunkt in Richtung des jeweils zugehörigen Ausgleichshebelarms erstreckt. Ein zweiter Hebelarmabschnitt erstreckt sich ausgehend von dem Kreuzungspunkt in Richtung eines dem jeweils zugehörigen Ausgleichshebelarm abgewandten Hebelarmendes. Weiterhin sind die Hebelarme ausgehend vom Kreuzungspunkt derart in entgegengesetzte Richtung um die Hauptschwenkachse abgewinkelt, dass zwischen Längsachsen der Hebelarmabschnitte ein Winkel ausgebildet ist, der unterschiedlich zu 180 ° ist. Auch die Abwinklung der Hebelarme ist unter Berücksichtigung der Länge der Ausgleichshebelarme und gegebenenfalls unter Berücksichtigung einer Länge der Hebelarmabschnitte gewählt und ermöglicht die Sicherstellung einer linearen Bewegung, bei welcher sich ein Abstand zwischen den Befestigungsstrukturen der Ausgleichshebelarme in gleicher Weise wie ein Abstand zwischen den an den gegenüberliegenden Enden der Hebelarme angeordneten Befestigungsstrukturen verändert. Des Weiteren können aufgrund der Abwinklung bei gleichzeitig geringer Baugröße besonders große Verstellwege realisiert werden.

Die schwenkbare Anordnung des jeweiligen Ausgleichshebelarms am zugehörigen Hebelarm erfolgt mittels eines Schwenklagers, wobei das Schwenklager eine an dem Ausgleichshebelarm oder an dem Hebelarm angeordnete Lagerschale mit einer die Lagerschale durchdringenden Öffnung und einen an dem Hebelarm oder an dem Ausgleichshebelarm angeordneten und mit der Lagerschale korrespondierenden Lagerkörper umfasst. Dabei ist ein Abstand zwischen mit der Lagerschale korrespondierenden Lagerflächen des Lagerkörpers kleiner als ein Innendurchmesser der Lagerschale und größer als eine Breite der Öffnung. Weiterhin ist eine sich zumindest im Wesentlichen senkrecht zu diesem Abstand erstreckende Breite des Lagerkörpers kleiner als die Breite der Öffnung. Diese Ausbildung des Schwenklagers ermöglicht eine gegen ein Herausrutschen des Lagerköpers aus der Lagerschale durch die Öffnung gesicherte Anordnung des Lagerkörpers in der Lagerschale. Dabei sind keine zusätzlichen Sicherungselemente erforderlich. Auch ist keine aufwändige Lagerung auf einer Welle oder einem Bolzen erforderlich.

In einer weiteren möglichen Ausgestaltung des Verstellmechanismus ist der Lagerkörper in einer relativen Stellung des jeweiligen Ausgleichshebelarms zum zugehörigen Hebelarm, welche sich außerhalb einer Betriebsstellung des Ausgleichshebelarms befindet, durch die Öffnung in die Lagerschale einführbar. Ferner ist der Lagerkörper in der Betriebsstellung formschlüssig in der Lagerschale gelagert. Diese Ausbildung des Schwenklagers ermöglicht eine gegen ein Herausrutschen des Lagerköpers aus der Lagerschale durch die Öffnung gesicherte Anordnung des Lagerkörpers in der Lagerschale in einer Betriebsstellung des Ausgleichshebelarms. Dabei ist ein Einführen des Lagerkörpers in die Lagerschale ausschließlich einer Stellung des jeweiligen Ausgleichshebelarms zum zugehörigen Hebelarm, welche sich außerhalb einer Betriebsstellung des Ausgleichshebelarms befindet, möglich. Hierdurch ist einerseits eine einfache Montage des Schwenklagers und andererseits ein besonders sicherer Betrieb desselben realisierbar.

In einer weiteren möglichen Ausgestaltung des Verstellmechanismus umfasst zumindest einer der Hebelarme eine Arretierungsstruktur zur Arretierung des Scherenhebels in unterschiedlichen relativen Schwenkpositionen der Hebelarme zueinander, so dass eine sichere Arretierung der an dem Scherenhebel anordbaren Bauteile in unterschiedlichen Positionen relativ zueinander möglich sind.

Die erfindungsgemäße Kopfstütze für einen Sitz, insbesondere einen Fahrzeugsitz, umfasst einen Kopfstützenkörper mit einem zu einer Befestigung an dem Sitz ausgebildeten Basiselement, ein Kopfanlageelement mit einer Kopfanlagefläche und einen mit dem Basiselement und dem Kopfanlageelement mechanisch gekoppelten und zwischen dem Basiselement und dem Kopfanlageelement angeordneten erfindungsgemäßen Verstellmechanismus oder eine Ausgestaltung desselben zu einer Längsverschiebung des Kopfanlageelements in Sitzrichtung und entgegengesetzt zu dieser.

Unter der Sitzrichtung wird dabei vorliegend eine Richtung verstanden, in welcher sich ein Sitzender in einem Sitz befindet. Die Sitzrichtung erstreckt sich dabei im Allgemeinen ausgehend von einer Sitzlehne über eine Sitzfläche von der Sitzlehne nach vorn.

Der als Fahrzeugsitz ausgebildete Sitz ist beispielsweise in einem Landfahrzeug, einem Wasserfahrzeug oder einem Luftfahrzeug angeordnet.

Die Kopfstütze kann aufgrund der Verwendung des Verstellmechanismus mit seinem geringen Bauraumbedarf besonders kleinbauend, insbesondere mit geringer Ausdehnung in Sitzrichtung, realisiert werden und eine Geräuschentwicklung während der Längsverschiebung des Kopfanlageelements ist sehr gering. Auch ist ein Kraftaufwand zur manuellen oder motorischen Ausführung der Längsverschiebung verringert. Des Weiteren ergibt sich aus der besonders hohen Zuverlässigkeit und Lebensdauer des Verstellmechanismus ebenfalls eine besonders hohe Zuverlässigkeit und Lebensdauer der Kopfstütze.

In einer weiteren möglichen Ausgestaltung der Kopfstütze ist ein freies Ende des Ausgleichshebelarms des ersten Hebelarms mit dem Basiselement mechanisch gekoppelt. Ein diesem Ausgleichshebelarm gegenüberliegendes freies Ende des ersten Hebelarms ist mit dem Kopfanlageelement mechanisch gekoppelt. Ein freies Ende des Ausgleichshebelarms des zweiten Hebelarms ist mit dem Kopfanlageelement mechanisch gekoppelt und ein diesem Ausgleichshebelarm gegenüberliegendes freies Ende des zweiten Hebelarms ist mit dem Basiselement mechanisch gekoppelt. Diese Ausgestaltung der Kopfstütze ist besonders einfach mit geringem Material-, Montage- und Kostenaufwand realisierbar. Dabei ist mittels des Verstellmechanismus durch Schwenken der Hebelarme zueinander um die Hauptschwenkachse in besonders einfacher und zuverlässiger Weise eine Längsbewegung, d. h. insbesondere eine lineare Bewegung, des Kopfanlageelements in Sitzrichtung ausführbar.

In einer weiteren möglichen Ausgestaltung der Kopfstütze ist ein freies Ende des Ausgleichshebelarms des ersten Hebelarms mit dem Kopfanlageelement mechanisch gekoppelt. Ein diesem Ausgleichshebelarm gegenüberliegendes freies Ende des ersten Hebelarms ist mit dem Basiselement mechanisch gekoppelt. Ein freies Ende des Ausgleichshebelarms des zweiten Hebelarms ist mit dem Basiselement mechanisch gekoppelt und ein diesem Ausgleichshebelarm gegenüberliegendes freies Ende des zweiten Hebelarms ist mit dem Kopfanlageelement mechanisch gekoppelt. Diese Ausgestaltung der Kopfstütze ist besonders einfach mit geringem Material-, Montage- und Kostenaufwand realisierbar. Dabei ist mittels des Verstellmechanismus durch Schwenken der Hebelarme zueinander um die Hauptschwenkachse in besonders einfacher und zuverlässiger Weise eine Längsbewegung, d. h. insbesondere eine lineare Bewegung, des Kopfanlageelements in Sitzrichtung ausführbar.

Ausführungsbeispiele der Erfindung werden im Folgenden anhand von Zeichnungen näher erläutert.

Dabei zeigen:
- Figur 1: eine schematische Darstellung eines Verstellmechanismus für eine Kopfstütze mit einem Scherenhebel gemäß dem Stand der Technik in einer ersten Position,
- Figur 2: eine schematische Darstellung des Verstellmechanismus gemäß Figur 1 in einer ersten Position und einer weiteren Position,
- Figur 3: eine schematische Darstellung eines Ausführungsbeispiels eines Scherenhebels für einen Verstellmechanismus in einer ersten Position,
- Figur 4: eine schematische Darstellung des Scherenhebels gemäß Figur 3 in einer weiteren Position,
- Figur 5: eine schematische Darstellung eines Verstellmechanismus,
- Figur 6: schematisch einen Ausschnitt eines Hebelarms eines Scherenhebels für einen Verstellmechanismus und einen Ausgleichshebelarm vor einer Montage desselben an dem Hebelarm,
- Figur 7: schematisch einen Ausschnitt des Hebelarms und den Ausgleichshebelarm gemäß Figur 6 nach einer Montage desselben an dem Hebelarm in einer Montagestellung,
- Figur 8: schematisch einen Ausschnitt des Hebelarms und den Ausgleichshebelarm gemäß Figur 6 nach einer Montage desselben an dem Hebelarm in einer Betriebsstellung und
- Figur 9: eine schematische Darstellung eines weiteren Ausführungsbeispiels eines Scherenhebels für einen Verstellmechanismus.

Einander entsprechende Teile sind in allen Figuren mit den gleichen Bezugszeichen versehen.

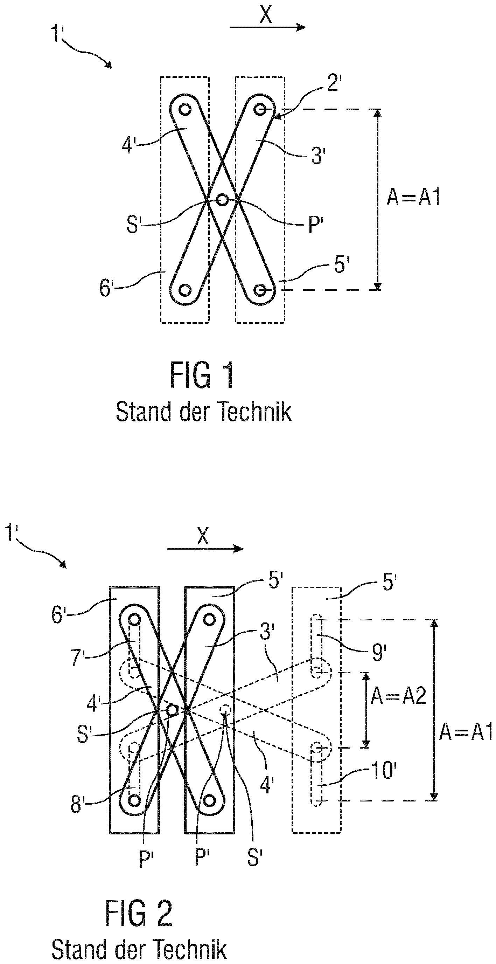

In **Figur 1** ist ein Verstellmechanismus 1' für eine nicht gezeigte Kopfstütze mit einem Scherenhebel 2' gemäß dem Stand der Technik in einer ersten Position dargestellt. **Figur 2** zeigt den Verstellmechanismus 1' in der ersten und einer weiteren in eine Sitzrichtung X verschobenen Position.

Der Scherenhebel 2' umfasst zwei Hebelarme 3', 4', welche an einem gemeinsamen Kreuzungspunkt P' um eine gemeinsame Schwenkachse S' zueinander schwenkbar sind.

Die Hebelarme 3', 4' sind an ihren freien Hebelarmenden mit einem Kopfanlageelement 5' der Kopfstütze und einem Basiselement 6' der Kopfstütze gekoppelt, wobei das Basiselement 6' zu einer Befestigung an einer Sitzlehne eines nicht dargestellten Sitzes, insbesondere eines Fahrzeugsitzes, vorgesehen ist. Dabei ist der Hebelarm 3' mit einem oberen freien Hebelarmende schwenkbar an dem Kopfanlageelement 5' und mit einem gegenüberliegenden unteren freien Hebelarmende schwenkbar an dem Basiselement 6' befestigt. Der Hebelarm 4' ist mit einem oberen freien Hebelarmende schwenkbar an dem Basiselement 6' und mit einem gegenüberliegenden unteren freien Hebelarmende schwenkbar an dem Kopfanlageelement 5' befestigt.

Der Verstellmechanismus 1' ist vorgesehen, das Kopfanlageelement 5' relativ zu dem Basiselement 6' in Sitzrichtung X und entgegengesetzt zu dieser linear längs zu verschieben. Insbesondere erfolgt die Verschiebung im dargestellten Beispiel als Parallelverschiebung.

Zu dieser Verschiebung erfolgt eine gegeneinander gerichtete Bewegung zweier Hebelarmenden, was eine gleichartige Bewegung der jeweils gegenüberliegenden Hebelarmenden zur Folge hat. Dabei verringert sich jedoch ein Abstand A zwischen den Hebelarmenden beider Hebelarme 3', 4' an dem Basiselement 6' und dem Kopfanlageelement 5' von einem Abstand A1 auf einen Abstand A2. Diese Änderung des Abstands A wird durch eine Längsverschiebung der Hebelarmenden in entsprechenden Führungen 7' bis 10' an dem Basiselement 6' und dem Kopfanlageelement 5', beispielsweise Langlöchern, ermöglicht. Eine derartige Längsverschiebung zeichnet sich jedoch durch hohe Reibungskräfte, die Gefahr von Verkantungen und eine relativ hohe Geräuschentwicklung aus.

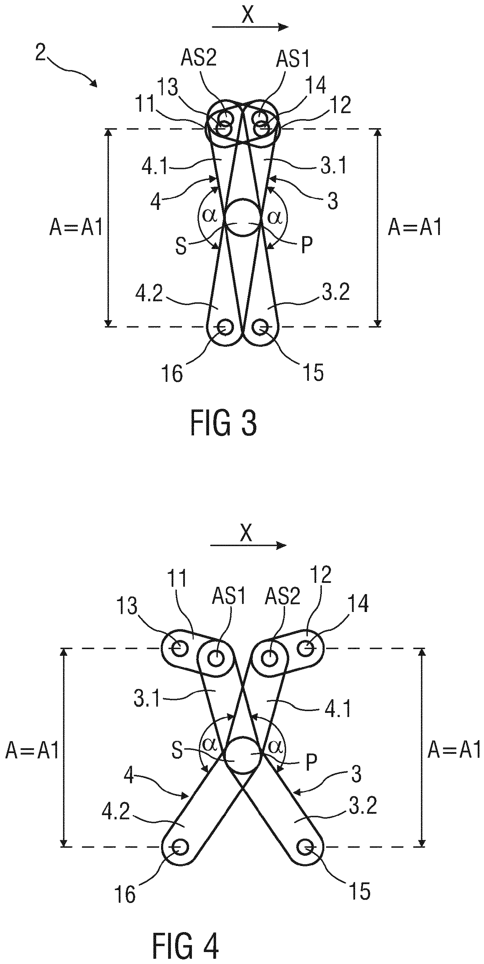

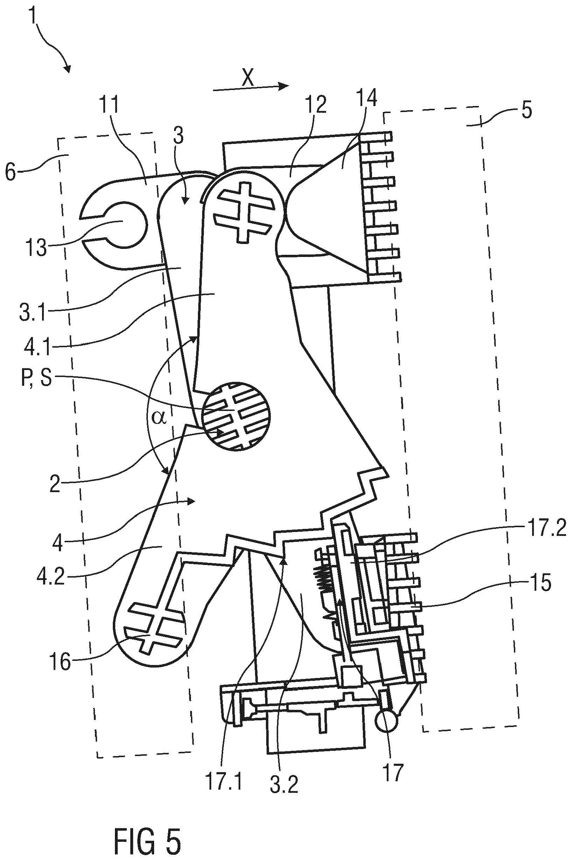

In **Figur 3** ist eine schematische Darstellung eines möglichen ersten Ausführungsbeispiels eines Scherenhebels 2 für ein mögliches Ausführungsbeispiel eines in **Figur 5** näher dargestellten Verstellmechanismus 1 in einer ersten Position dargestellt. **Figur 4** zeigt eine schematische Darstellung des Scherenhebels 2 gemäß **Figur 3** in einer weiteren in eine Sitzrichtung X verschobenen Position.

Der Verstellmechanismus 1 ist beispielsweise vorgesehen, ein in **Figur 5** näher dargestelltes Kopfanlageelement 5 relativ zu einem ebenfalls in **Figur 5** näher dargestellten Basiselement 6 in Sitzrichtung X und entgegengesetzt zu dieser linear längs zu verschieben. Insbesondere erfolgt die Verschiebung dabei als Parallelverschiebung.

Hierzu umfasst der Scherenhebel 2 zwei Hebelarme 3, 4, welche an einem gemeinsamen Kreuzungspunkt P um eine gemeinsame Hauptschwenkachse S zueinander schwenkbar sind.

Dabei ist an den oberen Hebelarmenden jedes Hebelarms 3, 4 jeweils ein Ausgleichshebelarm 11, 12 schwenkbar um eine parallel zu der Hauptschwenkachse S verlaufende Ausgleichsschwenkachse AS1, AS2 angeordnet.

Bei einer Verwendung des Verstellmechanismus für eine Kopfstütze eines Sitzes, insbesondere eines Fahrzeugsitzes, ist ein freies Ende des Ausgleichshebelarms 11 des ersten Hebelarms 3 mit dem Basiselement 6 der Kopfstütze mechanisch gekoppelt. Hierzu umfasst das freie Ende des Ausgleichshebelarms 11 eine Befestigungsstruktur 13 zu einer Befestigung des Ausgleichhebelarms 11 an einem Körper, hier an dem Basiselement 6. Ein diesem Ausgleichshebelarm 11 gegenüberliegendes unteres freies Hebelarmende des ersten Hebelarms 3 ist mit dem Kopfanlageelement 5 der Kopfstütze mechanisch gekoppelt und umfasst hierzu eine Befestigungsstruktur 15 zu einer Befestigung des Hebelarms 3 an einem Körper, hier an dem Kopfanlageelement 5.

Weiterhin ist ein freies Ende des Ausgleichshebelarms 12 des zweiten Hebelarms 4 mit dem Kopfanlageelement 5 der Kopfstütze mechanisch gekoppelt. Hierzu umfasst das freie Ende des Ausgleichshebelarms 12 eine Befestigungsstruktur 14 zu einer Befestigung des Ausgleichhebelarms 12 an einem Körper, hier an dem Kopfanlageelement 5. Ein diesem Ausgleichshebelarm 12 gegenüberliegendes unteres freies Hebelarmende des zweiten Hebelarms 4 ist mit dem Basiselement 6 der Kopfstütze mechanisch gekoppelt und umfasst hierzu eine Befestigungsstruktur 16 zu einer Befestigung des Hebelarms 4 an einem Körper, hier an dem Basiselement 6.

Alternativ ist auch eine Anordnung der Ausgleichshebelarme 11, 12 an den jeweils gegenüberliegenden unteren freien Enden der Hebelarme 3, 4 und eine entsprechende Befestigung an dem Kopfanlageelement 5 und dem Basiselement 6 möglich.

Zur linearen Längsverschiebung, insbesondere Parallelverschiebung, des Kopfanlageelements 5 relativ zum Basiselement 6 in Sitzrichtung X und entgegengesetzt zu dieser erfolgt eine gegeneinander gerichtete, manuell oder motorisch angetriebene Bewegung zweier Hebelarmenden, was eine gleichartige Bewegung der jeweils gegenüberliegenden Hebelarmenden zur Folge hat. Aufgrund der Ausgleichsschwenkbewegung der Ausgleichhebelarme 11, 12 um die Ausgleichsschwenkachsen AS1, AS2 beträgt der Abstand A zwischen dem freien Enden des jeweiligen Ausgleichhebelarms 11, 12 eines Hebelarms 3, 4 und dem freien Hebelarmende des jeweils anderen Hebelarms 4, 3 konstant den Wert des Abstands A1. Somit kann eine Längsverschiebung der Hebelarmenden und Enden der Ausgleichshebelarme 11, 12 am Basiselement 6 und Kopfanlageelement 5 entfallen.

Zur Sicherstellung der linearen Bewegung, bei welcher sich der Abstand A zwischen den Befestigungsstrukturen 13, 14 der Ausgleichshebelarme 11, 12 in gleicher Weise wie ein Abstand A zwischen den an den gegenüberliegenden Hebelarmenden angeordneten Befestigungsstrukturen 15, 16 verändert, sind die Hebelarme 3, 4 zusätzlich abgewinkelt. Hierbei umfassen die Hebelarme 3, 4 jeweils zwei Hebelarmabschnitte 3.1, 3.2, 4.1, 4.2, wobei sich ein jeweiliger erster Hebelarmabschnitt 3.1, 4.1 ausgehend von dem Kreuzungspunkt P in Richtung des jeweils zugehörigen Ausgleichshebelarms 11, 12 erstreckt. Ein jeweiliger zweiter Hebelarmabschnitt 3.2, 4.2 ausgehend von dem Kreuzungspunkt P erstreckt sich in Richtung eines dem jeweils zugehörigen Ausgleichshebelarm 11 abgewandten Hebelarmendes. Dabei sind die Hebelarme 3, 4 ausgehend vom Kreuzungspunkt P derart in entgegengesetzte Richtung um die Hauptschwenkachse S abgewinkelt, dass zwischen Längsachsen der Hebelarmabschnitte 3.1, 3.2, 4.1, 4.2 ein Winkel α ausgebildet ist, der unterschiedlich zu 180 ° ist. Die Abwinklung der Hebelarme 3, 4 ist dabei insbesondere unter Berücksichtigung der Länge der Ausgleichshebelarme 11, 12 und unter Berücksichtigung einer Länge der Hebelarmabschnitte 3.1, 3.2, 4.1, 4.2 gewählt.

In **Figur 5** ist eine schematische Darstellung eines möglichen Ausführungsbeispiels eines Verstellmechanismus 1 für eine Kopfstütze mit einem Basiselement 6 und einem Kopfanlageelement 5 dargestellt.

Der Verstellmechanismus 1 umfasst einen Scherenhebel 2, dessen Funktion dem in den **Figuren 3 und 4** dargestellten Ausführungsbeispiel des Scherenhebels 2 entspricht.

Zusätzlich umfasst der Verstellmechanismus 1 einen Arretierungsmechanismus 17, welcher eine in den Hebelarm 4 eingebrachte stufenförmige Arretierungsstruktur 17.1 und ein am Hebelarm 3 angeordnetes korrespondierendes und federbelastetes Arretierungselement 17.2 umfasst. Die Arretierungsstruktur 17.1 ist zur Arretierung des Scherenhebels 2 in unterschiedlichen relativen Schwenkpositionen der Hebelarme 3, 4 zueinander vorgesehen.

Dabei ist der Arretierungsmechanismus 17 derart ausgebildet, dass das Arretierungselement 17.2 bei einer Bewegung des Kopfanlageelements 5 in Sitzrichtung X selbsttätig in den einzelnen Stufen der Arretierungsstruktur 17.1 einrastet. Bei einer Bewegung des Kopfanlageelements 5 entgegen zur Sitzrichtung X ist eine aktive Lösung des Arretierungselements 17.2 entgegen der Federkraft erforderlich.

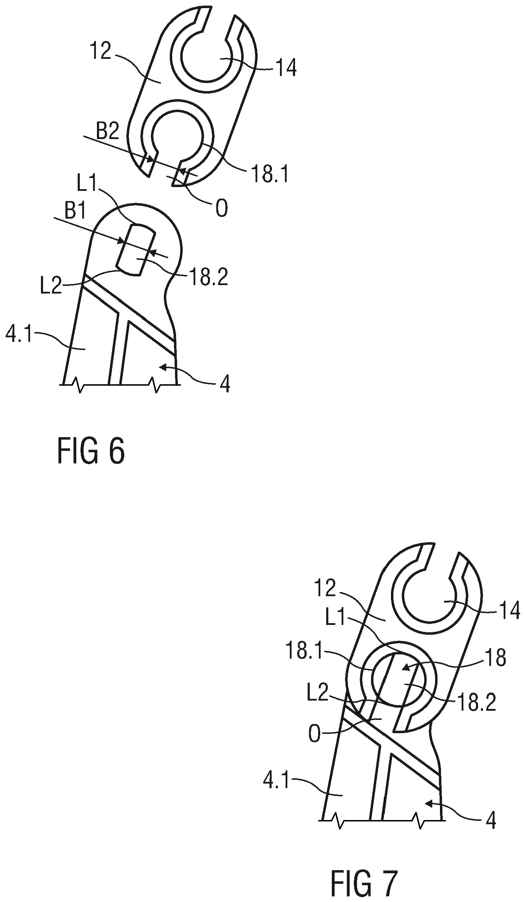

In den **Figuren 6 bis 8** sind jeweils ein Ausschnitt eines Hebelarms 4 eines Scherenhebels 2, beispielsweise des Scherenhebels 2 gemäß den Ausführungsbeispielen in den **Figuren 3 und 4****,** **Figur 5** **oder** **Figur 9****,** für einen Verstellmechanismus 1 und einen Ausgleichshebelarm 12 in unterschiedlichen Montageabschnitten dargestellt.

Die schwenkbare Anordnung des jeweiligen Ausgleichshebelarms 11, 12 am zugehörigen Hebelarm 3, 4 erfolgt mittels eines Schwenklagers 18, wobei das Schwenklager 18 eine an dem Ausgleichshebelarm 11, 12, vorliegend am Ausgleichshebelarm 11, angeordnete Lagerschale 18.1 mit einer die Lagerschale 18.1 durchdringenden Öffnung O umfasst. Weiterhin umfasst das Schwenklager 18 einen an dem Hebelarm 3, 4, vorliegend am Hebelarm 4, angeordneten und mit der Lagerschale 18.1 korrespondierenden Lagerkörper 18.2.

Dabei ist ein Abstand zwischen mit der Lagerschale 18.1 korrespondierenden Lagerflächen L1, L2 des Lagerkörpers 18.2 kleiner als ein Innendurchmesser der Lagerschale 18.1 und größer als eine Breite B2 der Öffnung O. Weiterhin ist eine sich zumindest im Wesentlichen senkrecht zu diesem Abstand erstreckende Breite B1 des Lagerkörpers 18.2 kleiner als die Breite B2 der Öffnung O.

Hierdurch ist es möglich, den Lagerkörper 18.2 in einer relativen Stellung des jeweiligen Ausgleichshebelarms 11, 12 zum zugehörigen Hebelarm 3, 4, welche sich außerhalb einer Betriebsstellung des Ausgleichshebelarms 11, 12 befindet, durch die Öffnung O in die Lagerschale 18.1 einzuführen (dargestellt in den **Figuren 6 und 7**).

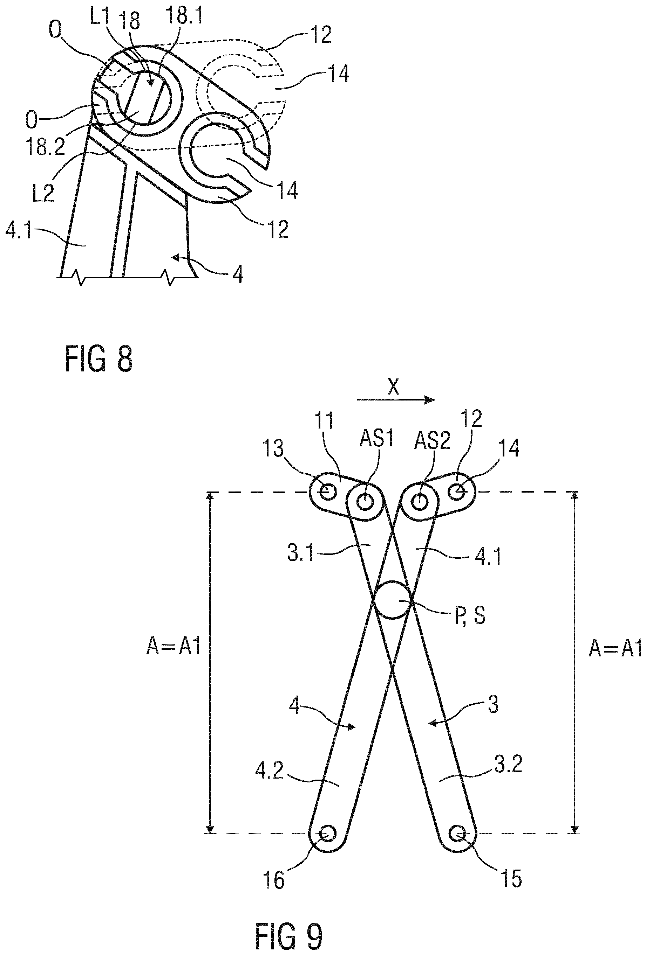

In jeder möglichen Betriebsstellung (dargestellt in **Figur 8**) ist der Lagerkörper 18.2 formschlüssig in der Lagerschale 18.1 gelagert und gegen ein Herausgleiten aus der Öffnung O gesichert.

In **Figur 9** ist ein weiteres mögliches Ausführungsbeispiel eines Scherenhebels 2 für einen Verstellmechanismus 1 dargestellt.

Im Unterschied zu dem in den **Figuren 3 und 4** dargestellten Ausführungsbeispiel des Scherenhebels 2 weisen die Hebelarme 3, 4 keine Abwinklung auf.

Um dennoch die lineare Bewegung, bei welcher sich der Abstand A zwischen den Befestigungsstrukturen 13, 14 der Ausgleichshebelarme 11, 12 in gleicher Weise wie ein Abstand A zwischen den an den gegenüberliegenden Hebelarmenden angeordneten Befestigungsstrukturen 15, 16 verändert, sicherzustellen, ist der Kreuzungspunkt P ausgehend von einer Mitte der Hebelarme 3, 4 in Richtung der Ausgleichshebelarme 11, 12 verschoben. Das heißt, die ersten Hebelarmabschnitte 3.1, 4.1 weisen eine geringe Länge als die zweiten Hebelarmabschnitte 3.2, 4.2 auf. Dabei ist eine Größe der Verschiebung insbesondere abhängig von einer Länge der Ausgleichshebelarme 11, 12 und beträgt beispielsweise 80 % bis 100 % der Länge der Ausgleichshebelarme 11, 12.

In nicht näher dargestellten Ausführungsbeispielen ist auch eine Kombination aus abgewinkelter Ausführung der Hebelarme 3, 4 um den Winkel α und Verschiebung des Kreuzungspunkts P ausgehend von der Mitte der Hebelarme 3, 4 in Richtung der Ausgleichshebelarme 11, 12 möglich.

### Bezugszeichenliste

- 1: Verstellmechanismus
- 1': Verstellmechanismus
- 2: Scherenhebel
- 2': Scherenhebel
- 3: Hebelarm
- 3.1: Hebelarmabschnitt
- 3.2: Hebelarmabschnitt
- 3': Hebelarm
- 4: Hebelarm
- 4.1: Hebelarmabschnitt
- 4.2: Hebelarmabschnitt
- 4': Hebelarm
- 5: Kopfanlageelement
- 5': Kopfanlageelement
- 6: Basiselement
- 6': Basiselement
- 7' bis 10': Führung
- 11: Ausgleichshebelarm
- 12: Ausgleichshebelarm
- 13 bis 16: Befestigungsstruktur
- 17: Arretierungsmechanismus
- 17.1: Arretierungsstruktur
- 17.2: Arretierungselement
- 18: Schwenklager
- 18.1: Lagerschale
- 18.2: Lagerkörper

- A, A1, A2: Abstand
- AS1, AS2: Ausgleichsschwenkachse
- B1, B2: Breite
- L1, L2: Lagerfläche
- O: Öffnung
- P: Kreuzungspunkt
- P': Kreuzungspunkt
- S: Hauptschwenkachse
- S': Schwenkachse
- X: Sitzrichtung

- α: Winkel

## Patentansprüche

1. Verstellmechanismus (1), insbesondere für eine Kopfstütze für einen Sitz, mit einem Scherenhebel (2), umfassend zumindest einen ersten Hebelarm (3) und zumindest einem zweiten Hebelarm (4), welche an einem gemeinsamen Kreuzungspunkt (P) um eine gemeinsame Hauptschwenkachse (S) zueinander schwenkbar sind,
**dadurch gekennzeichnet, dass**
- an genau einem Hebelarmende jedes Hebelarms (3, 4) ein Ausgleichshebelarm (11, 12) schwenkbar um eine parallel zu der Hauptschwenkachse (S) verlaufende Ausgleichsschwenkachse (AS1, AS2) angeordnet ist, wobei
- ein freies Ende des jeweiligen Ausgleichshebelarms (11, 12) eine Befestigungsstruktur (13, 14) zu einer Befestigung des Ausgleichhebelarms (11, 12) an einem Körper und
- ein dem Ausgleichshebelarm (11, 12) des jeweiligen Hebelarms (3, 4) gegenüberliegendes Hebelarmende eine Befestigungsstruktur (15, 16) zu einer Befestigung des Hebelarms (3, 4) an einem Körper umfasst, wobei die schwenkbare Anordnung des jeweiligen Ausgleichshebelarms (11, 12) am zugehörigen Hebelarm (3, 4) mittels eines Schwenklagers (18) erfolgt, wobei
- das Schwenklager (18) eine an dem Ausgleichshebelarm (11, 12) oder an dem Hebelarm (3, 4) angeordnete Lagerschale (18.1) mit einer die Lagerschale (18.1) durchdringenden Öffnung (O) und einen an dem Hebelarm (3, 4) oder an dem Ausgleichshebelarm (11, 12) angeordneten und mit der Lagerschale (18.1) korrespondierenden Lagerkörper (18.2) umfasst,
- wobei ein Abstand zwischen mit der Lagerschale (18.1) korrespondierenden Lagerflächen (L1, L2) des Lagerkörpers (18.2) kleiner als ein Innendurchmesser der Lagerschale (18.1) und größer als eine Breite (B2) der Öffnung (O) ist und
- wobei eine sich zumindest im Wesentlichen senkrecht zu diesem Abstand erstreckende Breite (B1) des Lagerkörpers (18.2) kleiner als die Breite (B2) der Öffnung (O) ist..

2. Verstellmechanismus (1) nach Anspruch 1,
**dadurch gekennzeichnet, dass** der Kreuzungspunkt (P) ausgehend von einer Mitte der Hebelarme (3, 4) in Richtung der Ausgleichshebelarme (11, 12) verschoben ist.

3. Verstellmechanismus (1) nach Anspruch 1 oder 2,
**dadurch gekennzeichnet, dass** die Hebelarme (3, 4) jeweils zwei Hebelarmabschnitte (3.1, 3.2, 4.1, 4.2) aufweisen, wobei
- sich ein erster Hebelarmabschnitt (3.1, 4.1) ausgehend von dem Kreuzungspunkt (P) in Richtung des jeweils zugehörigen Ausgleichshebelarms (11, 12) erstreckt,
- sich ein zweiter Hebelarmabschnitt (3.2, 4.2) ausgehend von dem Kreuzungspunkt (P) in Richtung eines dem jeweils zugehörigen Ausgleichshebelarm (11, 12) abgewandten Hebelarmendes erstreckt und
- die Hebelarme (3, 4) ausgehend vom Kreuzungspunkt (P) derart in entgegengesetzte Richtung um die Hauptschwenkachse (S) abgewinkelt sind, dass zwischen Längsachsen der Hebelarmabschnitte (3.1, 3.2, 4.1, 4.2) ein Winkel (α) ausgebildet ist, der unterschiedlich zu 180 ° ist.

4. Verstellmechanismus (1) nach einem der vorhergehenden Ansprüche, **dadurch gekennzeichnet, dass**
- der Lagerkörper (18.2) in einer relativen Stellung des jeweiligen Ausgleichshebelarms (11, 12) zum zugehörigen Hebelarm (3, 4), welche sich außerhalb einer Betriebsstellung des Ausgleichshebelarms (11, 12) befindet, durch die Öffnung (O) in die Lagerschale (18.1) einführbar ist und
- der Lagerkörper (18.2) in der Betriebsstellung des Ausgleichshebelarms (11, 12) formschlüssig in der Lagerschale (18.1) gelagert ist.

5. Verstellmechanismus (1) nach einem der vorhergehenden Ansprüche, **dadurch gekennzeichnet, dass** zumindest einer der Hebelarme (3, 4) eine Arretierungsstruktur (17.1) zur Arretierung des Scherenhebels (2) in unterschiedlichen relativen Schwenkpositionen der Hebelarme (3, 4) zueinander umfasst.

6. Kopfstütze für einen Sitz, insbesondere einen Fahrzeugsitz, mit einem Kopfstützenkörper, umfassend
- ein zu einer Befestigung an dem Sitz ausgebildetes Basiselement (6),
- ein Kopfanlageelement (5) mit einer Kopfanlagefläche und
- einen mit dem Basiselement (6) und dem Kopfanlageelement (5) mechanisch gekoppelten und zwischen dem Basiselement (6) und dem Kopfanlageelement (5) angeordneten Verstellmechanismus (1) nach einem der vorhergehenden Ansprüche zu einer Längsverschiebung des Kopfanlageelements (5) in Sitzrichtung (X) und entgegengesetzt zu dieser.

7. Kopfstütze nach Anspruch 6, wobei
- ein freies Ende des Ausgleichshebelarms (11) des ersten Hebelarms (3) mit dem Basiselement (6) mechanisch gekoppelt ist,
- ein diesem Ausgleichshebelarm (11) gegenüberliegendes freies Hebelarmende des ersten Hebelarms (3) mit dem Kopfanlageelement (5) mechanisch gekoppelt ist,
- ein freies Ende des Ausgleichshebelarms (12) des zweiten Hebelarms (4) mit dem Kopfanlageelement (5) mechanisch gekoppelt ist und
- ein diesem Ausgleichshebelarm (12) gegenüberliegendes freies Hebelarmende des zweiten Hebelarms (4) mit dem Basiselement (6) mechanisch gekoppelt ist.

8. Kopfstütze nach Anspruch 6, wobei
- ein freies Ende des Ausgleichshebelarms (11) des ersten Hebelarms (3) mit dem Kopfanlageelement (5) mechanisch gekoppelt ist,
- ein diesem Ausgleichshebelarm (11) gegenüberliegendes freies Hebelarmende des ersten Hebelarms (3) mit dem Basiselement (6) mechanisch gekoppelt ist,
- ein freies Ende des Ausgleichshebelarms (12) des zweiten Hebelarms (4) mit dem Basiselement (6) mechanisch gekoppelt ist und
- ein diesem Ausgleichshebelarm (12) gegenüberliegendes freies Hebelarmende des zweiten Hebelarms (4) mit dem Kopfanlageelement (5) mechanisch gekoppelt ist.

## Claims

1. Adjustment mechanism (1), in particular for a headrest for a seat, which has a scissor lever (2) comprising at least one first lever arm (3) and at least one second lever arm (4), which can be pivoted in relation to one another about a common main pivot axis (S) at a common point of intersection (P),
**characterized in that**
- a compensating lever arm (11, 12) is arranged at precisely one lever-arm end of each lever arm (3, 4) so as to be pivotable about a compensating pivot axis (AS1, AS2), which runs parallel to the main pivot axis (S), wherein
- a free end of the respective compensating lever arm (11, 12) comprises a fastening structure (13, 14) for fastening the compensating lever arm (11, 12) on a body, and
- a lever-arm end located opposite the compensating lever arm (11, 12) of the respective lever arm (3, 4) comprises a fastening structure (15, 16) for fastening the lever arm (3, 4) on a body,
wherein the pivotable arrangement of the respective compensating lever arm (11, 12) on the associated lever arm (3, 4) is implemented by a pivot bearing (18), wherein
- the pivot bearing (18) comprises a bearing shell (18.1), which is arranged on the compensating lever arm (11, 12) or on the lever arm (3, 4) and has an opening (O) penetrating the bearing shell (18.1), and comprises a bearing body (18.2), which is arranged on the lever arm (3, 4) or on the compensating lever arm (11, 12) and corresponds with the bearing shell (18.1),
- wherein a distance between bearing surfaces (L1, L2) of the bearing body (18.2), these bearing surfaces corresponding with the bearing shell (18.1), is smaller than an internal diameter of the bearing shell (18.1) and larger than a width (B2) of the opening (O), and
- wherein a width (B1) of the bearing body (18.2), this width extending at least substantially perpendicularly to the aforementioned distance, is smaller than the width (B2) of the opening (O).

2. Adjustment mechanism (1) according to Claim 1, **characterized in that**, starting from a centre of the lever arms (3, 4), the point of intersection (P) is displaced in the direction of the compensating lever arms (11, 12).

3. Adjustment mechanism (1) according to Claim 1 or 2, **characterized in that** the lever arms (3, 4) each have two lever-arm portions (3.1, 3.2, 4.1, 4.2), wherein
- starting from the point of intersection (P), a first lever-arm portion (3.1, 4.1) extends in the direction of the respectively associated compensating lever arm (11, 12),
- starting from the point of intersection (P), a second lever-arm portion (3.2, 4.2) extends in the direction of a lever-arm end remote from the respectively associated compensating lever arm (11, 12), and
- starting from the point of intersection (P), the lever arms (3, 4) are angled in opposite directions about the main pivot axis (S) such that an angle (α), which is other than 180°, is formed between longitudinal axes of the lever-arm portions (3.1, 3.2, 4.1, 4.2).

4. Adjustment mechanism (1) according to one of the preceding claims, **characterized in that**
- in a position of the respective compensating lever arm (11, 12) relative to the associated lever arm (3, 4) that is outside an operating position of the compensating lever arm (11, 12), the bearing body (18.2) can be inserted through the opening (O) into the bearing shell (18.1), and
- in the operating position of the compensating lever arm (11, 12), the bearing body (18.2) is mounted in a form-fitting manner in the bearing shell (18.1).

5. Adjustment mechanism (1) according to one of the preceding claims, **characterized in that** at least one of the lever arms (3, 4) comprises an arresting structure (17.1) for arresting the scissor lever (2) in different pivoted positions of the lever arms (3, 4) relative to one another.

6. Headrest for a seat, in particular a vehicle seat, which has a headrest body comprising
- a base element (6), which is designed for fastening on the seat,
- a head-contact element (5) with a head-contact surface, and
- an adjustment mechanism (1) according to one of the preceding claims, the adjustment mechanism being coupled mechanically to the base element (6) and to the head-contact element (5), being arranged between the base element (6) and the head-contact element (5) and being intended to provide for longitudinal displacement of the head-contact element (5) in the seat direction (X) and in the direction counter thereto.

7. Headrest according to Claim 6, wherein
- a free end of the compensating lever arm (11) of the first lever arm (3) is coupled mechanically to the base element (6),
- a free lever-arm end of the first lever arm (3), this free end being located opposite the aforementioned compensating lever arm (11), is coupled mechanically to the head-contact element (5),
- a free end of the compensating lever arm (12) of the second lever arm (4) is coupled mechanically to the head-contact element (5), and
- a free lever-arm end of the second lever arm (4), this free end being located opposite the aforementioned compensating lever arm (12), is coupled mechanically to the base element (6).

8. Headrest according to Claim 6, wherein
- a free end of the compensating lever arm (11) of the first lever arm (3) is coupled mechanically to the head-contact element (5),
- a free lever-arm end of the first lever arm (3), this free end being located opposite the aforementioned compensating lever arm (11), is coupled mechanically to the base element (6),
- a free end of the compensating lever arm (12) of the second lever arm (4) is coupled mechanically to the base element (6), and
- a free lever-arm end of the second lever arm (4), this free end being located opposite the aforementioned compensating lever arm (12), is coupled mechanically to the head-contact element (5) .

## Revendications

1. Mécanisme de réglage (1), notamment pour un appui-tête pour un siège, avec un levier à ciseaux (2), comprenant au moins un premier bras de levier (3) et au moins un deuxième bras de levier (4), qui peuvent pivoter l'un par rapport à l'autre en un point de croisement commun (P) autour d'un axe de pivotement principal commun (S),
**caractérisé en ce que**
- à exactement une extrémité de bras de levier de chaque bras de levier (3, 4) est agencé un bras de levier de compensation (11, 12) de manière pivotante autour d'un axe de pivotement de compensation (AS1, AS2) s'étendant parallèlement à l'axe de pivotement principal (S),
- une extrémité libre du bras de levier de compensation respectif (11, 12) comprenant une structure de fixation (13, 14) pour une fixation du bras de levier de compensation (11, 12) sur un corps et
- une extrémité de bras de levier opposée au bras de levier de compensation (11, 12) du bras de levier respectif (3, 4) comprenant une structure de fixation (15, 16) pour une fixation du bras de levier (3, 4) sur un corps,
l'agencement pivotant du bras de levier de compensation respectif (11, 12) sur le bras de levier associé (3, 4) s'effectuant au moyen d'un palier pivotant (18),
- le palier pivotant (18) comprenant un coussinet (18.1) agencé sur le bras de levier de compensation (11, 12) ou sur le bras de levier (3, 4), avec une ouverture (O) traversant le coussinet (18.1) et un corps de palier (18.2) agencé sur le bras de levier (3, 4) ou sur le bras de levier de compensation (11, 12) et correspondant au coussinet (18.1),
- une distance entre les surfaces de palier (L1, L2) du corps de palier (18.2) correspondant au coussinet (18.1) étant inférieure à un diamètre intérieur du coussinet (18.1) et supérieure à une largeur (B2) de l'ouverture (O) et
- une largeur (B1) du corps de palier (18.2) s'étendant au moins essentiellement perpendiculairement à cette distance étant inférieure à la largeur (B2) de l'ouverture (O).

2. Mécanisme de réglage (1) selon la revendication 1, **caractérisé en ce que** le point de croisement (P) est déplacé en direction des bras de levier de compensation (11, 12) à partir d'un centre des bras de levier (3, 4).

3. Mécanisme de réglage (1) selon la revendication 1 ou 2, **caractérisé en ce que** les bras de levier (3, 4) présentent chacun deux sections de bras de levier (3.1, 3.2, 4.1, 4.2),
- une première section de bras de levier (3.1, 4.1) s'étendant à partir du point de croisement (P) en direction du bras de levier de compensation (11, 12) respectivement associé,
- une deuxième section de bras de levier (3.2, 4.2) s'étendant à partir du point de croisement (P) en direction d'une extrémité de bras de levier détournée du bras de levier de compensation (11, 12) respectivement associé, et
- les bras de levier (3, 4) étant coudés dans des directions opposées autour de l'axe de pivotement principal (S) à partir du point de croisement (P) de telle sorte qu'un angle (α) différent de 180° est formé entre les axes longitudinaux des sections de bras de levier (3.1, 3.2, 4.1, 4.2).

4. Mécanisme de réglage (1) selon l'une quelconque des revendications précédentes, **caractérisé en ce que**
- le corps de palier (18.2) peut être introduit dans le coussinet (18.1) à travers l'ouverture (O) dans une position relative du bras de levier de compensation respectif (11, 12) par rapport au bras de levier associé (3, 4), qui se trouve en dehors d'une position de fonctionnement du bras de levier de compensation (11, 12) et
- le corps de palier (18.2) est logé par complémentarité de forme dans le coussinet (18.1) dans la position de fonctionnement du bras de levier de compensation (11, 12).

5. Mécanisme de réglage (1) selon l'une quelconque des revendications précédentes, **caractérisé en ce qu'**au moins l'un des bras de levier (3, 4) comprend une structure de blocage (17.1) pour bloquer le levier à ciseaux (2) dans différentes positions de pivotement relatives des bras de levier (3, 4) l'un par rapport à l'autre.

6. Appui-tête pour un siège, notamment un siège de véhicule, avec un corps d'appui-tête, comprenant
- un élément de base (6) configuré pour une fixation sur le siège,
- un élément d'appui de tête (5) avec une surface d'appui de tête et
- un mécanisme de réglage (1) selon l'une quelconque des revendications précédentes couplé mécaniquement à l'élément de base (6) et à l'élément d'appui de tête (5) et agencé entre l'élément de base (6) et l'élément d'appui de tête (5) pour un déplacement longitudinal de l'élément d'appui de tête (5) dans la direction du siège (X) et en sens inverse de celle-ci.

7. Appui-tête selon la revendication 6, dans lequel
- une extrémité libre du bras de levier de compensation (11) du premier bras de levier (3) est couplée mécaniquement à l'élément de base (6),
- une extrémité de bras de levier libre du premier bras de levier (3), opposée à ce bras de levier de compensation (11), est couplée mécaniquement à l'élément d'appui de tête (5),
- une extrémité libre du bras de levier de compensation (12) du deuxième bras de levier (4) est couplée mécaniquement à l'élément d'appui de tête (5), et
- une extrémité de bras de levier libre du deuxième bras de levier (4), opposée à ce bras de levier de compensation (12), est couplée mécaniquement à l'élément de base (6).

8. Appui-tête selon la revendication 6, dans lequel
- une extrémité libre du bras de levier de compensation (11) du premier bras de levier (3) est couplée mécaniquement à l'élément d'appui de tête (5),
- une extrémité de bras de levier libre du premier bras de levier (3), opposée à ce bras de levier de compensation (11), est couplée mécaniquement à l'élément de base (6),
- une extrémité libre du bras de levier de compensation (12) du deuxième bras de levier (4) est couplée mécaniquement à l'élément de base (6), et
- une extrémité de bras de levier libre du deuxième bras de levier (4), opposée à ce bras de levier de compensation (12), est couplée mécaniquement à l'élément d'appui de tête (5).
